# EUROPÄISCHE PATENTSCHRIFT

(11) **EP 2 358 583 B1**
(45) Veröffentlichungstag und Bekanntmachung des Hinweises auf die Patenterteilung: **19.09.2012**
(21) Anmeldenummer: 09801383.2
(22) Anmeldetag: 17.11.2009
(51) Int. Cl.: B62J 7/08, B62J 9/00

(54) **HALTERUNG FÜR EINEN KORB**
MOUNTING FOR A BASKET
ATTACHE DE PANIER

(30) Priorität: 26.11.2008 DE 102008059063
(43) Veröffentlichungstag der Anmeldung: 24.08.2011
(73) Patentinhaber: Floryszczak, Adrian, 33775 Versmold (DE)
(72) Erfinder: Floryszczak, Adrian, 33775 Versmold (DE)
(74) Vertreter: Bossmeyer, Jörg Peter
(86) Internationale Anmeldenummer: PCT/DE2009/001611
(87) Internationale Veröffentlichungsnummer: WO 2010/060411

(56) Entgegenhaltungen:
- FR-A- 1 432 077
- JP-A- 2007 182 128
- US-A- 4 053 091

## Beschreibung

Die Erfindung betrifft eine Halterung für einen Korb nach dem Oberbegriff des Patentanspruches 1.

Die JP-A-2007182128 offenbart eine an einem Träger montierbare Halterung, die durch einen Bügel gebildet ist, der Befestigungslaschen aufweist, die an Querstreben des Trägers fixierbar sind.

Allgemein bekannt und handelsüblich sind Fahrradkörbe aus einer gitterförmigen Struktur, die üblicherweise auf den Gepäckträger aufgesetzt und lediglich durch eine Feder vorgespannt und gegen den Fahrradsattel gedrückt werden. Dabei ist der Abstand zwischen Korb und Fahrradsattel unveränderbar was zur einer Beeinträchtigung hinsichtlich des Komforts oder beim Befüllen des Korbes führt. Die genannte Befestigung ist zudem instabil, so dass ein befüllter Korb durch geringe Erschütterungen vom Rad fallen kann.

Weiter sind Fahrradkörbe handelsüblich und daher bekannt, die mittels Schrauben oder durch Klemmmechanismen befestigt werden und somit eine gewisse Stabilität gewährleisten. Der Nachteil dieser Fahrradkörbe besteht in den verhältnismäßig hohen Kosten für die Herstellung und in dem Aufwand für die Montage, die zudem nur mit einem Werkzeug möglich ist.

Aufgabe der Erfindung ist es, eine Halterung für einen Korb zu schaffen, die bei einfacher und preiswerter Herstellung eine schnelle, werkzeuglose Montage beziehungsweise Demontage erlaubt und zwar bei Gewährleistung einer stabilen Befestigung, wobei eine Kompatibilität mit den meisten Körben und Gepäckträgern gewährleitstet sein soll.

Die Erfindung löst die Aufgabenstellung mit den Merkmalen des Patentanspruches 1.
Weitere Ausgestaltungen der Erfindung sind Gegenstand der Unteransprüche.

Eine Halterung für einen Korb zur werkzeuglosen Montage auf dem Gepäckträger eines Zweirades, wobei die Halterung durch einen Bügel gebildet ist, der wenigstens eine Befestigungslasche aufweist, die an einer Querstrebe des Gepäckträgers fixierbar ist, wurde erfindungsgemäß dahingehend weitergebildet, dass die Schenkel des Bügels jeweils zumindest einen elastisch verformbaren Abschnitt zur lösbaren Befestigung der Halterung an Längsstreben des Gepäckträgers aufweisen oder jeweils mindestens einen derartig elastisch verformbaren Abschnitt bilden.

Die Erfindung ist mit den meisten Gepäckträgern kompatibel, also unabhängig von der Ausführung oder Länge des Gepäckträgers anwendbar. Weiterhin ist sie zu allen Körben, die eine gitterförmige Struktur oder Maschen aufweisen, passend.
Der Abstand zwischen Korb und Fahrradsattel kann individuell verstellt werden. Zur Montage oder Demontage bedarf es nur weniger Handgriffe, sodass die Montage oder Demontage einfach und zügig erfolgen kann, ohne den Gebrauch von Werkzeug zu erfordern.

Eine erste, fertigungstechnisch sehr einfache Ausgestaltung der Erfindung besteht darin, dass die Befestigungslasche aus einem bogen- oder hakenförmig ausgebildeten Streifen oder Bügel besteht.

Vorteilhaft ist es darüber hinaus, wenn an den Enden der Schenkel jeweils mindestens eine krallenartige Befestigungsklammer vorhanden ist. Eine sehr einfache Ausführung sieht fest an den Schenkeln angeordnete Befestigungsklammern vor. Die Befestigungsklammern können jedoch gemäß eines weiterführenden Gedankens der Erfindung in Längsrichtung der Schenkel verschiebbar ausgeführt und in jeder Position an den Schenkeln fixierbar sein, was die Variabilität der Halterung insgesamt steigert.
Die Montage der Halterung wird verbessert, indem das Einhängen der zwei Befestigungslaschen an Querstreben des Gepäckträgers und das Aufspreizen der beiden freien Schenkel nahezu zeitgleich erfolgt, wobei die Schenkel an den Längsstreben des Gepäckträgers mit Hilfe der Befestigungsklammern verspannt werden. Die Demontage erfolgt durch das Aufweiten der Schenkel und das Lösen der Befestigungsklammern vom Gepäckträger.

Zur Optimierung der Auflage und des Festsitzes der Halterung auf dem Gepäckträger ist es hilfreich, wenn die Halterung einen Stützsteg aufweist. Dieser Stützsteg wird in einfacher Weise aus einem bogenförmigen Bügel oder einer zungenartig ausgebildeten Lasche hergestellt und ist entgegen der Richtung der Befestigungslasche ausgerichtet, wenn die Halterung montiert ist. Nach der Montage liegt der Stützsteg auf Querstreben des Gepäckträgers auf.

Eine Halterung nach der Erfindung ist für unterschiedliche Gepäckträgerausführungen verwendbar, was zum Beispiel durch eine vorteilhafte Ausgestaltung erreicht werden kann, die darin besteht, dass die Halterung einen in Längsrichtung der Schenkel verschiebbaren Steg aufweist. Durch diesen Steg kann insbesondere auch die Position des Korbes variiert werden.

Zur Erweiterung der Einsatzmöglichkeiten einer erfindungsgemäßen Halterung ist es ferner vorteilhaft, wenn an dem Bügel und/oder an dem Steg Befestigungsösen vorhanden sind.
Die Befestigungsösen dienen entweder zur Befestigung des Korbes mittels Kabelbindern oder, je nach Wunsch, zur Anbringung eines Schutznetzes beziehungsweise zur Befestigung von Spannseilen.

Von besonderem Vorteil ist es darüber hinaus, wenn der Abstand zwischen den Enden der Schenkel des Bügels geringer ist als die Breite des mit der Halterung auszustattenden Gepäckträgers. Damit kann ohne zusätzliche Mittel eine elastische Anlage der Schenkel an den Längsträgern des Gepäckträgers erreicht werden. Erforderlich ist bei der Montage lediglich ein Aufweiten der Schenkel des Bügels bis diese am Gepäckträger angesetzt werden können.

Die Schenkel können ferner eine die Abmessungen des Korbes übersteigende Länge aufweisen, was einerseits die Elastizität der Schenkel und andererseits ihre Handhabung verbessert.

Entsprechend einer konkreten Ausführung kann der Bügel eine U-Form aufweisen.

Um möglichst wenige Einzelteile bereitstellen und montieren zu müssen, geht eine sehr vorteilhafte Lösung dahin, die Halterung einstückig an dem Korb auszubilden.

Die Erfindung wird nachfolgend anhand der beigefügten Zeichnungen näher erläutert. Das gezeigte Ausführungsbeispiel stellt keine Einschränkung auf die dargestellte Variante dar, sondern dient lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: die Draufsicht auf eine erfindungsgemäße Halterung,
- Figur 2:: eine Seitenansicht der Halterung in Richtung des Pfeils II in Figur 1
und
- Figur 3:: eine Seitenansicht der Halterung mit montiertem Korb.

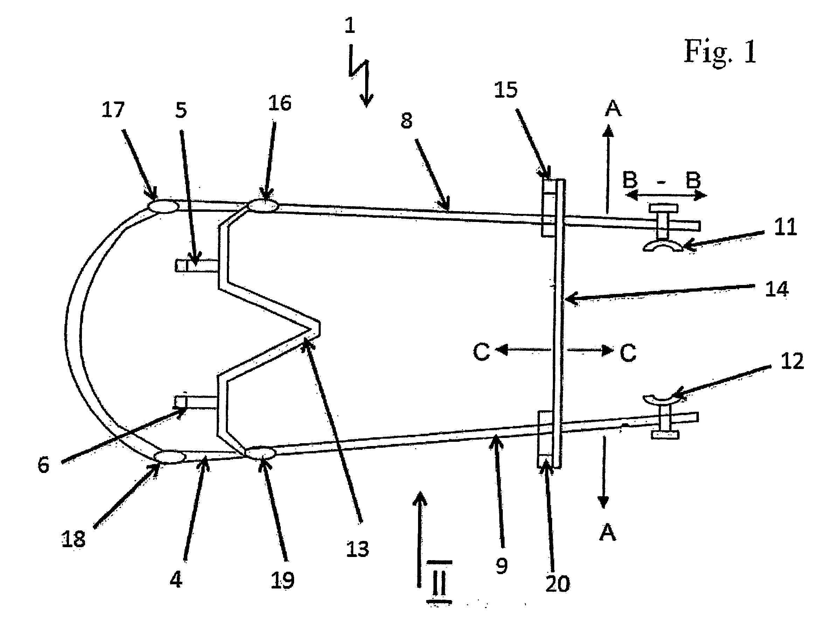

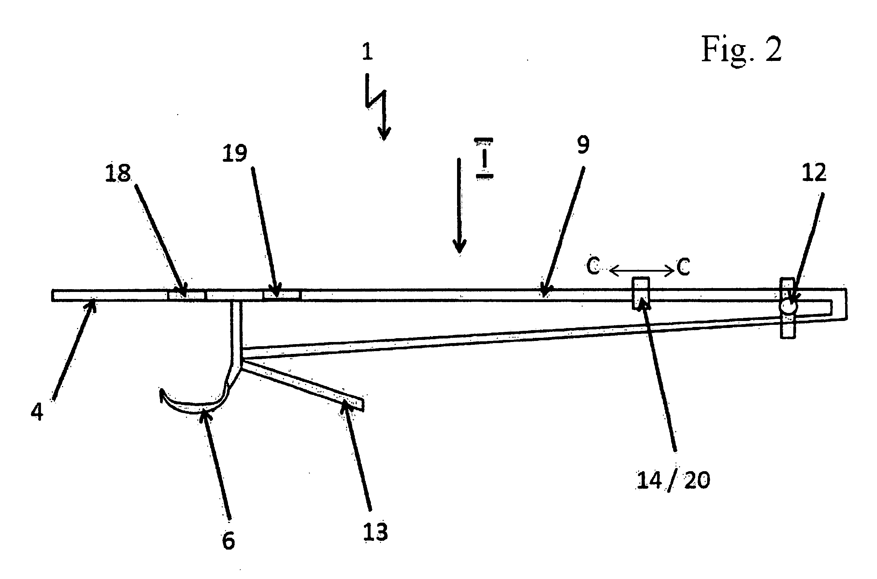

In den Figuren 1 bis 3 besteht die Halterung 1 aus einem Bügel 4, Befestigungslaschen 5 und 6, Schenkeln 8 und 9, Befestigungsklammern 11 und 12, einem Stützsteg 13, einem verstellbaren Steg 14 und Befestigungsösen 15, 16, 17, 18, 19, 20. Die Schenkel 8, 9 lassen sich in Richtung A-A elastisch aufweiten, sodass die Halterung 1 mittels der krallenartig ausgeführten Befestigungsklammern 11 und 12 an Längsstreben 10 des Gepäckträgers 3 eines Zweirades angesetzt werden kann und die Halterung 1 dadurch klemmend fixiert wird. Zur Befestigung der Halterung 1 an dem Gepäckträger 3, können die Befestigungsklammern 11 und 12 ferner bei Bedarf in Richtung B-B verstellt werden, um einen optimalen Sitz und eine Kompatibilität für alle Gepäckträger zu gewährleisten. Die Befestigungslaschen 5 und 6 werden unter eine Querstrebe 7 des Gepäckträgers 3 geklemmt, während der Stützsteg 13 auf einer Querstrebe aufliegt und damit eine stabilisierende Funktion ausübt.

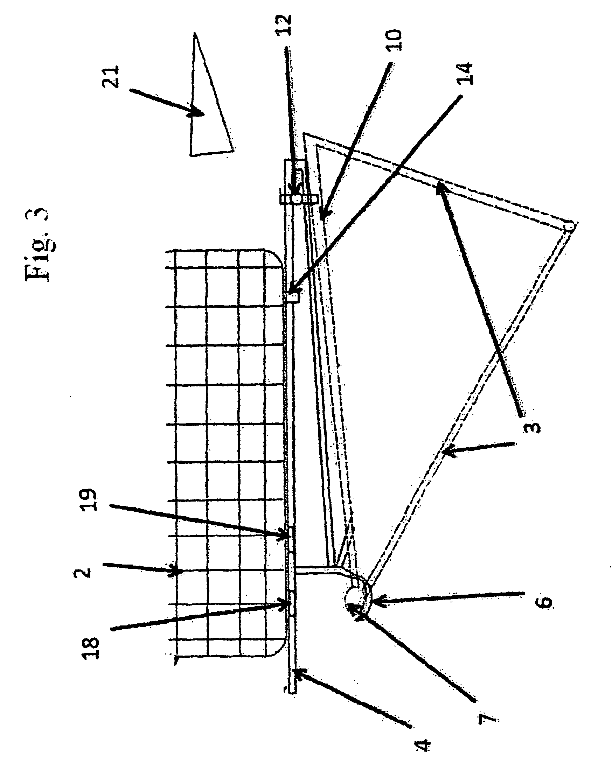

Anhand der Darstellung in Figur 3 stellt sich der Gebrauch der Vorrichtung folgendermaßen dar:
Der Korb 2 wird beispielsweise mittels mehrerer Kabelbinder an der Halterung 1 befestigt. Hierzu dienen die Befestigungsösen 15, 16, 17, 18, 19 und 20. Der Steg 14 ist in Richtung C-C verstellbar, um eine optimale Position der Befestigungsösen zum Korb 2 zu gewährleisten und einen erwünschten Abstand zum Fahrradsattel 21 zu erhalten.

Die Montage der Halterung 1 auf den Gepäckträger 3 erfolgt durch eine Verklemmung der Befestigungslaschen 5 und 6, an einer Querstrebe 7 des Gepäckträgers 3. Die Befestigungsklammern 11 und 12 werden durch Aufweitung der Schenkel 8 und 9 in Richtung A-A, an die Längsstrebe 10 des Gepäckträgers 3 geklemmt. Durch die Elastizität der Halterung 1 ist eine Spannkraft gegeben, die die krallenartig ausgebildeten Befestigungsklammern 11 und 12 gegen die Längsstreben 10 des Gepäckträgers 3 drückt, sodass die krallenartige Kontur die Längsstreben teilweise umgreift. Dabei wirkt der Stützsteg 13 sowohl als Auflage auf dem Gepäckträger 3, als auch als zusätzliches Spannelement, das ergänzend zu den Befestigungslaschen 5 und 6 und den Befestigungsklammern 11 und 12 wirkt. Die Demontage erfolgt durch ziehen der Schenkel 8 und 9 in Richtung A-A und gleichzeitiges Lösen der Befestigungslaschen 5 und 6 von der Querstrebe 7.

### Bezugszeichenliste:

- 1: Halterung
- 2: Korb
- 3: Gepäckträger
- 4: Bügel
- 5: Befestigungslasche
- 6: Befestigungslasche
- 7: Querstrebe
- 8: Schenkel
- 9: Schenkel
- 10: Längsstrebe
- 11: Befestigungsklammer
- 12: Befestigungsklammer
- 13: Stützsteg
- 14: Steg
- 15: Befestigungsöse
- 16: Befestigungsöse
- 17: Befestigungsöse
- 18: Befestigungsöse
- 19: Befestigungsöse
- 20: Befestigungsöse
- 21: Fahrradsattel

## Patentansprüche

1. Halterung (1) für einen Korb (2) zur werkzeuglosen Montage auf dem Gepäckträger (3) eines Zweirades, wobei die Halterung (1) durch einen Bügel (4) gebildet ist, der wenigstens eine Befestigungslasche (5, 6) aufweist, die an einer Querstrebe (7) des Gepäckträgers (3) fixierbar ist, **dadurch gekennzeichnet, dass**
Schenkel (8, 9) des Bügels (4) jeweils zumindest einen elastisch verformbaren Abschnitt zur lösbaren Befestigung der Halterung (1) an Längsstreben (10) des Gepäckträgers (3) aufweisen oder jeweils mindestens einen derartig elastisch verformbaren Abschnitt bilden.

2. Halterung für einen Korb nach Anspruch 1,
**dadurch gekennzeichnet, dass**
die Befestigungslasche (5, 6) aus einem bogen- oder hakenförmig ausgebildeten Streifen oder Bügel besteht.

3. Halterung nach einem der vorstehend genannten Ansprüche,
**dadurch gekennzeichnet, dass**
an den Enden der Schenkel (8, 9) jeweils mindestens eine krallenartige Befestigungsklammer (11, 12) vorhanden ist.

4. Halterung für einen Korb nach Anspruch 3,
**dadurch gekennzeichnet, dass**
jede Befestigungsklammer (11, 12) in Längsrichtung der Schenkel (8, 9) verschiebbar ausgeführt und in jeder Position an den Schenkeln (8, 9) fixierbar ist.

5. Halterung nach einem der vorstehend genannten Ansprüche,
**dadurch gekennzeichnet, dass**
die Halterung (1) einen Stützsteg (13) aufweist.

6. Halterung für einen Korb nach Anspruch 5,
**dadurch gekennzeichnet, dass**
der Stützsteg (13) aus einem bogenförmigen Bügel oder einer zungenartig ausgebildeten Lasche besteht und entgegen der Richtung der Befestigungslasche (5, 6) ausgerichtet ist.

7. Halterung nach einem der vorstehend genannten Ansprüche,
**dadurch gekennzeichnet, dass**
die Halterung (1) einen in Längsrichtung (C-C) der Schenkel (8, 9) verschiebbaren Steg (14) aufweist.

8. Halterung nach einem der vorstehend genannten Ansprüche,
**dadurch gekennzeichnet, dass**
an dem Bügel (4) und/oder an dem Steg (14) Befestigungsösen (15, 16, 17, 18, 19, 20) vorhanden sind.

9. Halterung nach einem der vorstehend genannten Ansprüche,
**dadurch gekennzeichnet, dass**
der Abstand zwischen den Enden der Schenkel (8, 9) des Bügels (4) geringer ist als die Breite eines mit der Halterung (1) auszustattenden Gepäckträgers (3).

10. Halterung nach einem der vorstehend genannten Ansprüche,
**dadurch gekennzeichnet, dass**
die Schenkel (8, 9) eine die Abmessungen eines an der Halterung (1) zu befestigenden Korbes (2) übersteigende Länge aufweisen.

11. Halterung nach einem der vorstehend genannten Ansprüche,
**dadurch gekennzeichnet, dass**
der Bügel (4) eine U-Form aufweist.

12. Halterung nach einem der vorstehend genannten Ansprüche,
**dadurch gekennzeichnet, dass**
die Halterung (1) einstückig an dem Korb (2) ausgebildet ist.

## Claims

1. Retention member (1) for a basket (2) for assembly without tools on the luggage carrier (3) of a bicycle, the retention member (1) being formed by a curved member (4) which has at least one securing plate (5, 6) which can be fixed to a transverse strut (7) of the luggage carrier (3), **characterised in that** members (8, 9) of the curved member (4) each have at least one resiliently deformable portion for releasably securing the retention member (1) to longitudinal struts (10) of the luggage carrier (3) or each form at least one portion which can be resiliently deformed **in that** manner.

2. Retention member for a basket according to claim 1,
**characterised in that**
the securing plate (5, 6) consists of a strip or curved member of arc-shaped or hook-like form.

3. Retention member according to either of the preceding claims,
**characterised in that**
at least one claw-like securing bracket (11, 12) is provided at each of the ends of the members (8, 9).

4. Retention member for a basket according to claim 3,
**characterised in that**
each securing bracket (11, 12) is constructed so as to be displaceable in the longitudinal direction of the members (8, 9) and can be fixed to the members (8, 9) in each position.

5. Retention member according to any one of the preceding claims,
**characterised in that**
the retention member (1) has a support web (13).

6. Retention member for a basket according to claim 5,
**characterised in that**
the support web (13) consists of an arc-shaped curved member or a tongue-like plate and is orientated counter to the direction of the securing plate (5, 6).

7. Retention member according to any one of the preceding claims,
**characterised in that**
the retention member (1) has a web (14) which can be displaced in the longitudinal direction (C-C) of the members (8, 9).

8. Retention member according to any one of the preceding claims,
**characterised in that**
securing eyelets (15, 16, 17, 18, 19, 20) are provided on the curved member (4) and/or on the web (14).

9. Retention member according to any one of the preceding claims,
**characterised in that**
the spacing between the ends of the members (8, 9) of the curved member (4) is smaller than the width of a luggage carrier (3) which is to be provided with the retention member (1).

10. Retention member according to any one of the preceding claims,
**characterised in that**
the members (8, 9) have a length which exceeds the dimensions of a basket (2) which is to be secured to the retention member (1).

11. Retention member according to any one of the preceding claims,
**characterised in that**
the curved member (4) has a U-shape.

12. Retention member according to any one of the preceding claims,
**characterised in that**
the retention member (1) is integrally constructed on the basket (2).

## Revendications

1. Attache (1) pour un panier (2) pour le montage sans outillage sur le porte-bagages (3) d'un deux-roues, laquelle attache (1) a la forme d'un étrier (4), qui présente au moins une patte de fixation (5, 6), qui peut être fixée sur un montant transversal (7) du porte-bagages (3),
**caractérisée en ce que**
des branches (8, 9) de l'étrier (4) présentent respectivement au moins une section élastiquement déformable pour une fixation amovible de l'attache (1) sur des montants longitudinaux (10) du porte-bagages (3) ou forment respectivement au moins une section élastiquement déformable de manière semblable.

2. Attache pour un panier selon la revendication 1,
**caractérisée en ce que**
la patte de fixation (5, 6) consiste en une bande ou un étrier conçu(e) en forme d'arc ou de crochet.

3. Attache selon l'une des revendications précédemment citées,
**caractérisée en ce**
**qu'**au moins une bride de fixation (11, 12) en forme de griffe est présente sur chacune des extrémités des branches (8, 9).

4. Attache pour un panier selon la revendication 3,
**caractérisée en ce que**
chaque bride de fixation (11, 12) est réalisée de manière à être coulissante dans le sens de la longueur des branches (8, 9) et peut être fixée dans chaque position sur les branches (8, 9).

5. Attache selon l'une des revendications précédemment citées,
**caractérisée en ce que**
l'attache (1) présente une traverse de soutien (13).

6. Attache pour un panier selon la revendication 5,
**caractérisée en ce que**
la traverse de soutien (13) consiste en un étrier en forme d'arc ou une patte en forme de languette et est orientée dans le sens contraire de la patte de fixation (5, 6).

7. Attache selon l'une des revendications précédemment citées,
**caractérisée en ce que**
l'attache (1) présente une traverse (14) pouvant coulisser dans le sens de la longueur (C-C) des branches (8, 9).

8. Attache selon l'une des revendications précédemment citées,
**caractérisée en ce que**
des oeillets de fixation (15, 16, 17, 18, 19, 20) sont présents sur l'étrier (4) et/ou sur la traverse (14).

9. Attache selon l'une des revendications précédemment citées,
**caractérisée en ce que**
la distance entre les extrémités des branches (8, 9) de l'étrier (4) est plus faible que la largeur d'un porte-bagages (3) à équiper avec l'attache (1).

10. Attache selon l'une des revendications précédemment citées,
**caractérisée en ce que**
les branches (8, 9) présentent une longueur dépassant les dimensions d'un panier (2) à fixer sur l'attache (1).

11. Attache selon l'une des revendications précédemment citées,
**caractérisée en ce que**
l'étrier (4) présente une forme en U.

12. Attache selon l'une des revendications précédemment citées,
**caractérisée en ce que**
l'attache (1) est conçue d'une seule pièce sur le panier (2).
